(19) Europäisches Patentamt

European Patent Office

Office européen des brevets

(11) Veröffentlichungsnummer: **0 304 650 B1**

(12) **EUROPÄISCHE PATENTSCHRIFT**

(45) Veröffentlichungstag der Patentschrift: **16.01.91**

(51) Int. Cl.⁵: **B 62 D 1/18**

(21) Anmeldenummer: **88112042.2**

(22) Anmeldetag: **26.07.88**

(54) **Abdeckmanschette.**

(30) Priorität: **26.08.87 DE 3728457**

(43) Veröffentlichungstag der Anmeldung:
**01.03.89 Patentblatt 89/09**

(45) Bekanntmachung des Hinweises auf die
Patenterteilung:
**16.01.91 Patentblatt 91/03**

(84) Benannte Vertragsstaaten:
**ES FR GB IT SE**

(56) Entgegenhaltungen:
**DE-A-2 922 425**
**FR-A-2 120 769**
**US-A-3 424 025**

(73) Patentinhaber: **Daimler-Benz Aktiengesellschaft**
**Postfach 600202 Mercedesstrasse 136**
**D-7000 Stuttgart 60 (DE)**

(72) Erfinder: **Bruhnke, Ulrich**
**Lindenstrasse 28**
**D-7031 Ehningen (DE)**
Erfinder: **Duenas, Santiago**
**Königshofweg 12**
**D-7210 Rottweil (DE)**
Erfinder: **Fischer, Helmut**
**Lilienstrasse 30**
**D-7030 Böblingen (DE)**
Erfinder: **Greiner, Ferdinand**
**Furtholzstrasse 25**
**D-7031 Aidlingen (DE)**
Erfinder: **Jobmann, Ingo**
**Adalbert-St.-Weg 9**
**D-7031 Grafenau 2 (DE)**
Erfinder: **Körber, Jürgen**
**Käthe Kollwitz Weg 4/1**
**D-7032 Sindelfingen (DE)**
Erfinder: **Nothacker, Siegfried**
**Hindenburgstrasse 70**
**D-7252 Weil der Stadt (DE)**

Courier Press, Leamington Spa, England.

**EP  0 304 650  B1**

(72) Erfinder: **Pfaffenbach, Jürgen**
**Patronatstrasse 6**
**D-7254 Hemmingen (DE)**
Erfinder: **Trube, Hans**
**Brühlstrasse 17**
**D-7033 Herrenberg 2 (DE)**

**Beschreibung**

Die Erfindung betrifft eine Abdeckmanschette nach der im Oberbegriff des Anspruchs 1 umschriebenen und durch die FR—A—2120769 bekannten Bauart.

Aus der FR—A 21 20 769 ist eine Abdeckmanschette für eine in der Neigung verstellbare Lenksäule bekannt, die entsprechend einem länglichen Balg ausgebildet, an zwei gegenüberliegenden Enden über eine Feder nachgiebig festgelegt ist. Dadurch kann die Abdeckmanschette mit der Bewegung der Lenksäule mitbewegt werden, die seitlichen Kanten des Balgs bleiben aber ohne Halt. Bei einer Längsverstellung der Lenksäule würde die Bdeckmanschette weiter von den seitlichen Aussparungsblechen abheben und eine nicht gewollte Eingriffsöffnung freigeben.

In der DE—PS 29 22 425 ist eine Abdeckmanschette beschrieben, die dazu dient, eine Aussparung in einer Armaturentafel, die für den Durchtritt einer in der Neigung verstellbaren Lenksäule durch die Armaturentafel notwendig ist, zwischen dem Aussparungsrand und der Lenksälenverkleidung zu überdecken. Diese Abdeckmanschette liegt mit ihrem verkleidungsseitigen Ende an der Lenksäulenverkleidung an und wird bei deren Bewegung durch den Einfluß eine Zugfeder mit dieser in der Aussparungsebene mitgeführt. Eine solche Manschettenausbildung ist für eine zusätzlich längsverstellbare Lenksäule nicht geeignet. Die flexible Abdeckmanschette soll die Aussparung abdichten und muß dazu bündig aufliegend an der Verkleidung zur Anlage gebracht werden. Dabei kann aber eine Längsverschiebung der Verkleidung, bei der hier hohe Querkräfte in die Abdeckmanschette eingeleitet würden, zu einer nachteiligen Verformung der Abdeckmanschette führen, durch die die Dichtfunktion gefährdet und der optische Gesamteindruck beeinträchtigt wäre.

Aus der US—PS 34 24 025 ist ein Abdeckbalg bekannt, der einen Raum zwischen einem eine Durchgangsbohrung für eine Lenkwelle aufweisenden und diese festklemmenden Handrad und einer entfernt davon die Lenkwelle umgebenden Verkleidung überdeckt. Dieser Abdeckbalg bildet unter der Verkleidung eine Schlaufe, wodurch eine Längsverschiebung der Lenkwelle in der Durchgangsbohrung ermöglicht ist. Für die schützende Überdeckung einer Aussparung in einer Armaturentafel für eine neigungsverstellbare Lenksäule wird durch diesen Abdeckbalg keine Lösung aufgezeigt.

Der Erfindung liegt deshalb die Aufgabe zugrunde, eine gattungsgemäße Abdeckmanschette für eine zusätzlich in Längsrichtung verstellbare Lenksäule bei ansprechendem Aussehen nutzbar zu machen.

Die Aufgabe wird durch die kennzeichnenden Merkmale des Hauptanspruchs gelöst.

Dadurch, daß die Abdeckmanschette an der Rückseite der Armaturentafel und an der Verkleidung befestigt ist, kann im Übergang zu diesen Teilen kein Schmutz durch die Aussparung dringen. Die Befestigung hat darüber hinaus eine schalldämmende Wirkung.

Die Abdeckmanschette läßt große Verstellbewegungen der Lenksäule zu und wird dabei durch den Spannrahmen immer in einer gestrafften und damit faltenarmen Spannlage gehalten.

Eine derartige Ausbildung ermöglicht sogar eine um die Verkleidung umlaufende Abdeckung der Aussparung.

Nach den Ansprüche 3 und 4 ist es einerseits möglich den Kantenfalz des Spannrahmens umlaufend an die Abdeckmanschette anlegbar auszubilden und die federnden Zugglieder daran entsprechend denen für eine faltenarme Spannlage notwendigen Zugpunkten angreifen zu lassen, oder auch den Spannrahmen über seinen Umfang in mehrere Abschnitte aufzuteilen, die in ihrer Wirkung individuell den Verstellanforderungen anpaßbar sind.

Ein in Anspruch 7 genanntes, flexibles Band, das zusätzlich am aussparungsseitigen Ende der Abdeckmanschette nachgiebig wirkt und/oder auch entsprechend Anspruch 8 am verkleidungsseitigen Ende der Abdeckmanschette zur Wirkung kommt, führt zu einer besonders vorteilhaften Glättung der bei der Lenksäulenverstellung durch die Verlagerung der Verkleidung in Bezug auf den Aussparungsrand auftretenden Falten in der Abdeckmanschette. Diese müßte bei den vielen möglichen Lenksäulenstellungen in Teilbereichen ihrer Befestigungsenden sehr unterschiedliche Belastungen aufnehmen, die nun in das flexible Band abgeleitet und durch dessen Dehnung ausgeglichen werden.

Drei Ausführungsbeispiele der Erfindung sind in der Zeichnung dargestellt.

Es zeigen:

Fig. 1 eine perspektivische Ansicht einer erfindungsgemäßen Abdeckmanschette in eingebautem Zustand,

Fig. 2 in einem Längsschnitt und in zwei Stellungen eine Abdeckmanschette mit durch eine Spiralfeder beaufschlagtem Spannrahmen,

Fig. 3 in einem Längsschnitt und in zwei Stellungen eine Abdeckmanschette mit einem Spannrahmen, der ein elastisches Band als Zugglied aufweist, und

Fig. 4 in einem Längsschnitt und in zwei Stellungen eine Abdeckmanschette, die beidseitig über ein flexibles Band befestigt und durch einen spiralfederbeaufschlagten Spannrahmen gespannt ist.

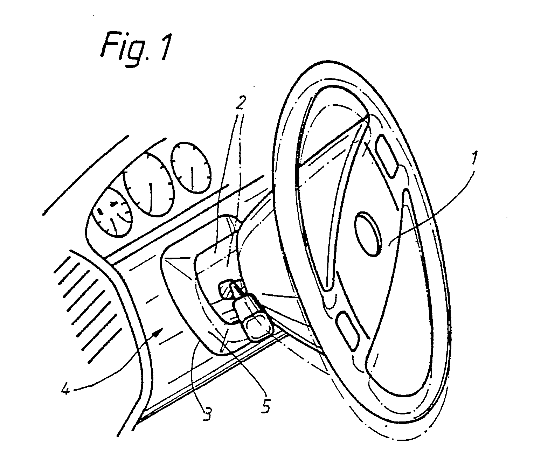

Fig. 1 zeigt ein Lenkrad 1 eines Kraftwagens, dessen Lenksäule 2 eine Aussparung 3 einer Armaturentafel 4 durchgreift, welche so groß ist, daß eine Neigungsverstellung der Lenksäule 2, wie hier strichpunktiert dargestellt, ohne Behinderung vorgenommen werden kann. Die Aussparung 3 ist mit einer Abdeckmanschette 5 überdeckt, die das Eindringen von Schmutz in den dahinterliegenden Raum verhindert und ein ansprechendes Aussehen bedingt.

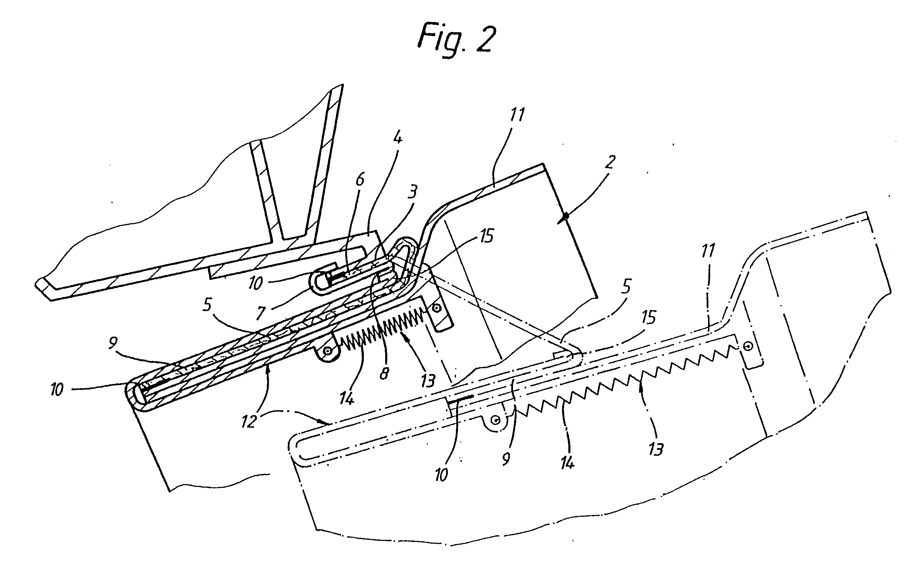

In Fig. 2 ist ein Längsschnitt durch die Anordnung im Bereich des Durchtritts der Lenksäule 2 durch die Armaturentafel 4 gezeigt. Die Abdeckmanschette 5 ist mit einem aussparungsseitigen Ende 6 an der vom Fahrzeuginnenraum nicht einsehbaren Rückseite der Armaturentafel 4 angeklebt und durch eine Klammer 7 bis zur Sichtkante der Armaturentafel 4 geführt, wo diese einen abgerundeten Anlagefalz 8 bildet, über den die Abdeckmanschette 5 umlegbar ist.

Mit ihrem gegenüberliegenden, verkleidungsseitigen Ende 9 ist die Abdeckmanschette 5 ebenfalls über eine Klebung 10 an einer Verkleidung 11 der Lenksäure 2 befestigt, wobei sie eine Bewegung der Lenksäule 2 bei einer Neigungs- und/oder Längsverstellung ohne zu behindern zuläßt und dabei mit der Verkleidung 11 mitbewegt wird. Um diese Bewegungen ausführen zu können, muß die Abdeckmanschette 5 sehr biegeweich und auch ausreichend großflächig sein. Ohne zusätzliche Spannbeaufschlagung der Oberfläche würden dabei in verschiedenen Bereichen unkontrolliert häßliche Falten auftreten.

Um dies zu verhindern, ist auf das lenkradferne Ende der Verkleidung 11 hinter der Abdeckmanschette 5 ein Spannrahmen 12 in Achsrichtung der Verkleidung verschiebbar aufgesetzt, der über ein federndes Zugglied 13, das hier durch eine Spiralfeder 14 gebildet wird, mit der Verkleidung 11 verbunden ist. Wird nun die Lage der Verkleidung 11, wie es strichpunktiert dargestellt ist, innerhalb der Aussparung 3 verändert, so kommt ein Kantenfalz 15 des Spannrahmens 12 an der Rückseite der Abdeckmanschette 5 zur Anlage, wonach bei weiterem Druck der Abdeckmanschette 5 auf den Kantenfalz 15 der Spannrahmen 12 am federnden Zugglied 13 zieht und durch dessen Spannung wiederum spannend gegen die Abdeckmanschette 5 gedrückt wird, die dadurch gestreckt und faltenarm zwischen ihren Befestigungsenden 6 und 9 liegt.

Der Spannrahmen 12 weist hier einen um die Verkleidung 11 umlaufenden Kantenfalz 15 auf, der durch zwei am Umfang des Spannrahmens 12 gegenüberliegend angreifende Spiralfedern 14 an die Abdeckmanschette 5 gedrückt wird.

Ebenso wäre es realisierbar, einen Spannrahmen 12 über seinen Umfang in mehrere Abschnitte aufzuteilen, die dann in den verschiedenen Lenksäulenstellungen unabhängig voneinander auf die Abdeckmanschette 5 wirken würden.

Die Abdeckmanschette 5 kann an der Armaturentafel 4 und an der Verkleidung 11 auch durch eine Klemmverbindung oder durch Klammern festgelegt werden.

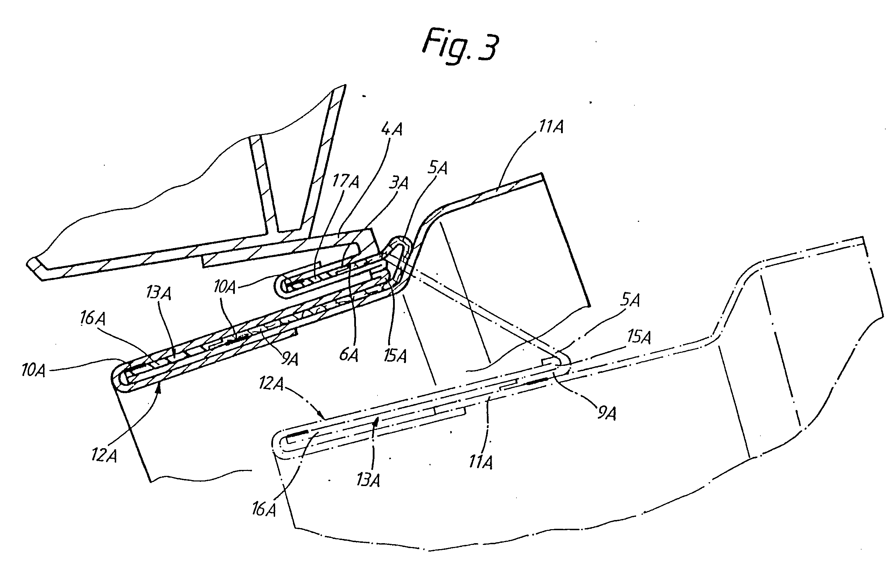

Fig. 3 zeigt eine Abdeckmanschette 5A, an deren verkleidungsseitigem Ende 9A ein elastisches Band 16A angenäht ist, das an einem Spannrahmen 12A über eine Klebung 10A befestigt ist. Das verkleidungsseitige Ende 9A der Abdeckmanschette 5A ist unmittelbar an einer Verkleidung 11A angeklebt. Dadurch wirkt das elastische Band 16A entsprechend wie ein federndes Zugglied 13A, durch das ein Kantenfalz 15A des Spannrahmens 12A bei einer geänderten, strichpunktiert dargestellten Position der Verkleidung 11A innerhalb der Aussparung 3A gegen die Rückseite der Abdeckmanschette 5A gedrückt wird und diese dadurch zwischen ihren Befestigungsenden 6A und 9A spannt.

Zusätzlich weist diese Ausführungsform ein am aussparungsseitigen Ende 6A der Abdeckmanschette 5A angenähtes, flexibles Band 17A auf, über das sie an der Rückseite einer Armaturentafel 4A mittelbar befestigt ist. Durch dieses flexible Band 17A werden die unterschiedlichen Zugbelastungen, die in den verschiedenen Verstellpositionen in einzelnen Manschettenbereichen wirken, ausgeglichen, so daß die Faltenbildung in der Abdeckmanschette 5A durch die Nachgiebigkeit des Bandes 17A gering gehalten werden kann.

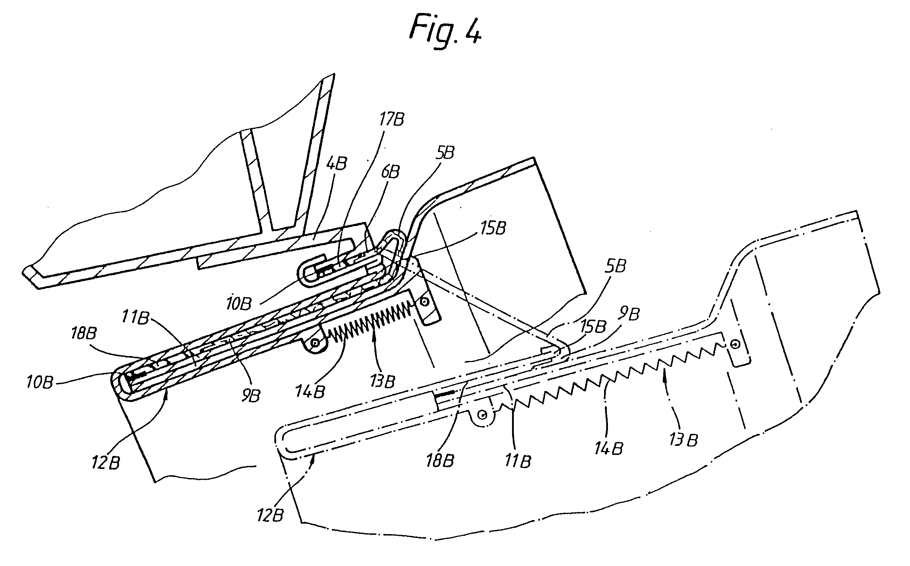

In Fig. 4 ist eine vorteilhafte Kombination der Bauteile zur Erhöhung der Flexibilität einer Abdeckmanschette 5B dargestellt. An beiden Befestigungsenden 6B und 9B ist ein flexibles Band 17B und 18B angenäht, über das die Abdeckmanschette 5B mittelbar an der Rückseite einer Armaturentafel 4B bzw. an einer Lenksäulenverkleidung 11B durch eine Klebung 10B befestigt ist. Ein auf die Rückseite der Abdeckmanschette 5B in verschiedenen Stellungen der Verkleidung 11B mit einem Kantenfalz 15B drückender Spannrahmen 12B ist über ein als Spiralfeder 14B ausgebildetes, federndes Zugglied 13B mit der Verkleidung 11B verbunden.

Durch diese Anordnung weist die Abdeckmanschette 5B selbst in den seitlichen Bereichen, wo die Verkleidung 11B bei der Neigungsverstellung parallel zum Verlauf der Manschettenbefestigung verschoben wird, eine nur geringe Faltenbildung auf.

**Patentansprüche**

1. Abdeckmanschette zur schützenden Überdeckung einer Aussparung, die für den Durchtritt einer in der Neigung verstellbaren Lenksäule eines Kraftfahrzeugs durch eine Armaturentafel (4, 4A, 4B) notwendig ist, wobei die Abdeckmanschette (5, 5A, 5B) vom Aussparungsrand ausgehend glattflächig die Aussparung bis zu einer Verkleidung (11, 11A, 11B) der Lenksäule, an der sie mit ihrem verkleidungsseitigen Ende befestigt ist, dichtend überdeckt und dabei mit der Bewegung der Lenksäule in der Aussparungsebene mitführbar und mit der Verkleidung bei einer Längsverstellung der Lenksäule aus der Aussparungsebene heraus bewegbar ist, dadurch gekennzeichnet, daß die Abdeckmanschette (5, 5A, 5B) mit ihrem aussparungsseitigen Ende (6, 6A, 6B) an der Rückseite der Armaturentafel (4, 4A, 4B) befestigt ist, und daß auf das lenkradferne Ende der Verkleidung (11, 11A, 11B) hinter der Abdeckmanschette (5, 5A, 5B) ein Spannrahmen (12, 12A, 12B) in der Achsrichtung der Verkleidung verschiebbar aufgesetzt ist, der über mindestens ein federndes, an der Verkleidung befestigtes Zugglied (13, 13A, 13B) in seiner Verschieberichtung beaufschlagbar ist, und der mit einem Kantenfals (15, 15A, 15B) an die Rückseite der Abdeckmanschette (5, 5A, 5B) anlegbar ist und diese zwischen ihren Befestigungsenden (6, 6A, 6B und 9, 9A, 9B) spannt, sobald die Abdeckmanschette auf den Spannrahmen gegen die Zugkraft des federnden Zuggliedes drückt.

2. Abdeckmanschette nach Anspruch 1, dadurch gekennzeichnet, daß die Abdeckmanschette (5, 5A, 5B) an der Verkleidung (11, 11A, 11B) anliegend diese vollständig umgibt.

3. Abdeckmanschette nach einem der Ansprüche 1 oder 2, dadurch gekennzeichnet, daß der Spannrahmen (12, 12A, 12B) einen um die Verkleidung (11, 11A, 11B) umlaufenden, nahe dieser liegenden Kantenfalz (15, 15A, 15B) aufweist, und daß am Spannrahmen (12, 12A, 12B) zumindest in der Verstellrichtung der Neigungsverstellung gegenüberliegend, jeweils ein federndes Zugglied (13, 13A, 13B) angreift.

4. Abdeckmanschette nach Anspruch 1, dadurch gekennzeichnet, daß der Spannrahmen (12, 12A, 12B) über seinen Umfang in mehrere getrennte Abschnitte aufgeteilt ist, die unabhängig voneinander verschiebbar sind, und an denen jeweils mindestens ein federndes Zugglied (13, 13A, 13B) angreift.

5. Abdeckmanschette nach einem oder mehreren der vorangegangenen Ansprüche, dadurch gekennzeichnet, daß das federnde Zugglied (13, 13B) als Spiralfeder (14, 14B) ausgeführt ist.

6. Abdeckmanschette nach einem oder mehreren der Ansprüche 1 bis 4, dadurch gekennzeichnet, daß das federnde Zugglied (13A) als ein am verkleidungsseitigen Ende (9A) der Abdeckmanschette (5A) befestigtes, elastisches Band (16A) ausführbar ist.

7. Abdeckmanschette nach Anspruch 1, dadurch gekennzeichnet, daß ein flexibles Band (17A, 17B) am aussparungsseitigen Ende (6A, 6B) der Abdeckmanschette (5A, 5B) befestigbar ist, das diese mittelbar an der Rückseite der Armaturentafel (4A, 4B) festlegt.

8. Abdeckmanschette nach einem oder mehreren der vorangegangenen Ansprüche, dadurch gekennzeichnet, daß das verkleidungsseitige Ende (9B) der Abdeckmanschette (5B) an einem flexiblen Band (18B) und dieses an der Verkleidung (11B) befestigbar ist.

**Revendications**

1. Manchon de recouvrement pour une couverture protectrice d'un évidement nécessaire pour le passage d'une colonne de direction réglable en inclinaison, d'un véhicule automobile, au travers d'un tableau de bord (4, 4A, 4B), le manchon de recouvrement (5, 5A, 5B) recouvrant de façon étanche l'évidement à partir de son bord et avec une surface plane jusqu'à une gaine (11, 11A, 11B) de la colonne de direction, sur laquelle il est fixé par son extrémité située du côté-gaine, en étant alors entraîné par le mouvement de la colonne de direction dans le plan de l'évidement et en étant déplaçable avec la gaine en dehors du plan de l'évidement lors d'un réglage longitudinal de la colonne de direction, caractérisé en ce que le manchon de recouvrement (5, 5A, 5B) est fixé par son extrémité (6, 6A, 6B), située côté-évidement, sur le côté arrière du tableau de bord (4, 4A, 4B) et en ce qu'il est prévu à l'extrémité de la gaine (11, 11A, 11B) qui est éloignée du volant et en arrière du manchon de recouvrement (5, 5A, 5B), un châssis de tension (12, 12A, 12B) mobile par translation dans la direction axiale de la gaine, qui peut être sollicité dans sa direction de translation par l'intermédiaire d'au moins un organe élastique de traction (13, 13A, 13B), fixé sur la gaine et qui peut s'appliquer au moyen d'un bord plié (15, 15A, 15B) contre le côté arrière du manchon de recouvrement (5, 5A, 5B) en tendant celui-ci entre ses extrémités de fixation (6, 6A, 6B) et (9, 9A, 9B), aussitôt que le manchon de recouvrement s'applique contre le châssis de tension en opposition à la force de traction de l'organe élastique de traction.

2. Manchon de recouvrement selon la revendication 1, caractérisé en ce que ce manchon de recouvrement (5, 5A, 5B) entoure la gaine (11, 11A, 11B) en s'appliquant complètement contre celle-ci.

3. Manchon de recouvrement selon une des revendications 1 ou 2, caractérisé en ce que le châssis de tension (12, 12A, 12B) comporte un bord plié (15, 15A, 15B) entourant la gaine (11, 11A, 11B) et placé à proximité de celle-ci, et en ce que sur le châssis de tension (12, 12A, 12B) s'accroche en correspondance un organe élastique de traction (13, 13A, 13B), agissant dans un sens opposé au moins au sens de manoeuvre pour réglage d'inclinaison.

4. Manchon de recouvrement selon la revendication 1, caractérisé en ce que le châssis de tension (12, 12A, 12B) est divisé sur son pourtour en plusieurs parties séparées, qui sont mobiles par translation indépendamment l'une de l'autre et sur chacune desquelles s'accroche au moins un organe élastique de traction (13, 13A, 13B).

5. Manchon de recouvrement selon une ou plusieurs des revendications précédentes, caractérisé en ce que l'organe élastique de traction (13, 13B) est réalisé comme un ressort spiral (14, 14B).

6. Manchon de recouvrement selon une ou plusieurs des revendications 1 à 4, caractérisé en ce que l'organe élastique de traction (13A) peut être réalisé sous forme d'une bande élastique (16A), fixée à l'extrémité (9A), située côté-gaine, du manchon de recouvrement (5A).

7. Manchon de recouvrement selon la revendication 1, caractérisé en ce qu'une bande flexible (17A, 17B) peut être fixée à l'extrémité (6A, 6B), située côté-évidement, du manchon de recouvrement (5A, 5B), en maintenant celui-ci indirectement sur le côté arrière du tableau de bord (4A, 4B).

8. Manchon de recouvrement selon une ou plusieurs des revendications précédentes, caractérisé en ce que l'extrémité (9B), située côté-gaine, du manchon de recouvrement (5B) peut être fixée sur une bande flexible (18B) et celle-ci peut être fixée sur la gaine (11B).

## Claims

1. A cover sleeve for the protective covering of a recess which is necessary for the passage of a slant-adjustable steering column of a motor vehicle through a dashboard (4, 4A, 4B), the cover sleeve (5, 5A, 5B) extending from the edge of the recess sealingly covering in smooth-faced manner the recess as far as a sheathing (11, 11A, 11B) of the steering column to which it is secured by its end on the sheathing side, and being in the arrangement co-entrainable with the movement of the steering column in the plane of the recess and movable with the sheathing on a longitudinal displacement of the steering column out of the plane of the recess, chraacterized in that the cover sleeve (5, 5A, 5B) is secured by its end (6, 6A, 6B) on the recess side to the rear of the dashboard (4, 4A, 4B), and in that, on the end of the sheathing (11, 11A, 11B) distant from the steering wheel and behind the cover sleeve (5, 5A, 5B) a tensioning frame (12, 12A, 12B) is displaceably mounted in the axial direction of the sheathing, being impingeable in its direction of displacement by an elastic tension member (13, 13A, 13B) secured on the sheathing, and being able to be applied by means of an edge groove (15, 15A, 15B) on the rear of the cover sleeve (5, 5A, 5B), tensioning this between its securing ends (6, 6A, 6B and 9, 9A, 9B) as soon as the cover sleeve presses on the tensioning frame aginst the tractive force of the elastic tension member.

2. A cover sleeve according to claim 1, characterized in that the cover sleeve (5, 5A, 5B) lies on the sheathing (11, 11A, 11B) surrounding it completely.

3. A cover sleeve according to either claim 1 or claim 2, characterized in that the tensioning frame (12, 12A, 12B) has an edge groove (15, 15A, 15B) surrounding the sheathing (11, 11A, 11B) and lying close to it, and in that an elastic tension member (13, 13A, 13B) engages in each instance on the tensioning frame (12, 12A, 12B) lying at least opposite the direction of adjustment of the slant setting.

4. A cover sleeve according to claim 1, characterized in that the tensioning frame (12, 12A, 12B) is divided over its periphery into several separate portions which are displaceable independently of one another and onto which there engages respectively at least one elastic tension member (13, 13A, 13B).

5. A cover sleeve according to one or more of the foregoing claims, characterized in that the elastic tension member (13, 13B) is constructed as a spiral spring (14, 14B).

6. A cover sleeve according to one or more of claims 1 to 4, characterized in that the elastic tension member (13A) can be designed as an elastic band (16A) secured on the sheathing side end (9A) of the cover sleeve (5A).

7. A cover sleeve according to claim 1, characterized in that a flexible band (17A, 17B) can be secured on the recess side end (6A, 6B) of the cover sleeve (5A, 5B) applying the latter indirectly on the rear side of the dashboard (4A, 4B).

8. A cover sleeve according to one or more of the foregoing claims, characterized in that the sheathing side end (9B) of the cover sleeve (5B) can be secured on a flexible band (18B) and the latter on the sheathing (11B).

# Fig. 1

# Fig. 2

Fig. 3

4A
17A
3A
5A
5A
11A
10A
13A
6A
15A
9A
16A
12A
9A
15A
5A
11A
13A
10A
12A
16A

3

Fig. 4

4